# EUROPEAN PATENT APPLICATION

(11) **EP 2 595 027 A2**
(43) Date of publication of application: **22.05.2013**
(21) Application number: 12193175.2
(22) Date of filing: 19.11.2012
(51) Int. Cl.: G05F 1/67, H02J 7/35

(54) **Integrated control system for power generation devices**

(30) Priority: 21.11.2011 JP 2011254255
(71) Applicant: Honda Motor Co., Ltd., Tokyo 107-8556 (JP)
(72) Inventor: Kai, Takeshi, Saitama, 351-0193 (JP); Ohhira, Masaru, Saitama, 351-0193 (JP)
(74) Representative: Herzog, Markus

(57) **Abstract**

In case different kinds of power generation modules are mounted on a vehicle, an internal impedance and an availability condition varies by each, therefore a control circuit is needed for each of them. As the number of modules and control circuits grow, the cost and the power consumption increase and the efficiency decreases.

The present invention solves these issues for multiple power generation modules, composed of different power-harvesting media from each other, with an integrated control system for power generation devices that is configured for generating, charging and consuming the power with the most appropriate distribution ratio, by monitoring an internal impedance thereof and of the battery in real time, and then controlling the impedance-matching units so that each internal impedance of the multiple power generation modules becomes almost equal to that of the battery, for drawing the maximum efficiency out of the modules.

## Description

### Technical Field

The present invention is related to a system to control power generation devices, including power generation modules composed of different kinds of power-harvesting media such as a solar power generation, a thermal power generation, a radio-wave power generation and a vibration power generation, in an integrated manner.

### Background of the Invention

Recently there have been vehicles on which solar power generation modules are mounted in order to take measures against emerging environmental affairs inclusive of global warming and acid rain, and depletion of fossil resources including oil. For example, a technique is disclosed in Japanese Unexamined Patent Application Publication No. JP2011-68282, for charging a battery with solar-generated power.

In addition, a study has been under way for mounting power-harvesting media, other than the solar power generation, on a vehicle.

### Summary of the Invention

As disclosed in JP-A-2011-68282 above, a power generation by the solar power only has a problem that the power generation stops when the weather is not good or during night.

In case multiple power-harvesting media, including a solar power generation and others, are mounted on a vehicle, an internal impedance varies by each of power generation modules of a same kind or different kinds of media. In addition, there is a large gap for each of power generation modules between circumstances where power generation is always possible and circumstances where not, therefore a control circuit is needed for each of modules where necessary. As the number of power generation modules and control circuits grow, the cost and the power consumption increase and the power generation efficiency decreases.

The present invention solves these issues, and provides a system that includes multiple power generation modules, composed of different power-harvesting media from each other, for generating, charging and consuming the power with the most appropriate distribution ratio, drawing the maximum efficiency out of the power generation modules.

In order to achieve the objective, the present invention is configured as follows.

An integrated control system for power generation devices includes: multiple power generation modules, composed of different power-harvesting media from each other; multiple impedance-matching units for matching an internal impedance of each of the power generation modules, respectively; a control unit for monitoring and controlling the multiple impedance-matching units; and a battery for charging power generated by the multiple power generation modules and supplying the power to be consumed by various kinds of loads. The integrated control system for power generation devices controls the power generation devices by the control unit, which monitors an internal impedance of the battery and each of power generation modules in real time, and then controls the impedance-matching units so that the internal impedance of multiple power generation modules becomes almost equal to the detected internal impedance of the battery. Here, the power-harvesting media can be but not limited to a solar power generation, a radio-wave power generation, a thermal power generation and a vibration power generation. The integrated control system for power generation devices can be mounted on a vehicle.

The present invention can provide a system which can generate, charge and consume the power out of multiple power generation modules, composed of different power-harvesting media from each other, with the most appropriate distribution ratio, drawing the maximum efficiency out of the power generation modules.

### Brief Description of the Drawings

FIG.1 is a block diagram for a configuration of an embodiment of the integrated control system for power generation devices by the present invention.
FIG.2 illustrates an example where different power-harvesting media from each other are mounted on a vehicle for an embodiment of the integrated control system for power generation devices by the present invention.

### Embodiments of the Invention

Embodiments of the invention will be explained below.

### First Embodiment

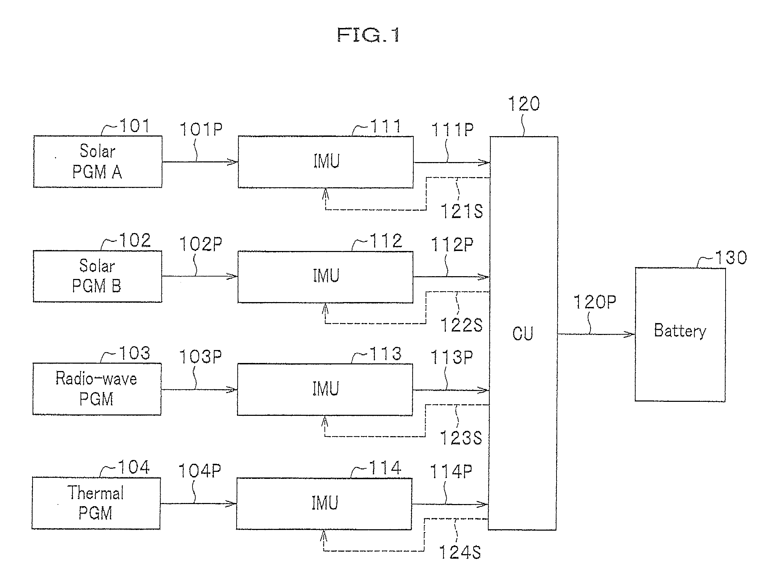

FIG.1 is a block diagram of a configuration for an embodiment of the integrated control system for power generation devices, according to the present invention.

### <Overview of Configuration for Integrated control system>

FIG.1 shows a solar power generation module (PGM) A 101 composed of solar power cells A, a solar power generation module (PGM) B 102 composed of solar power cells B, a radio-wave power generation module (PGM) 103 composed of radio-wave power cells and a thermal power generation module (PGM) 104 composed of thermal power cells, as the power-harvesting media,.

The solar power generation module A 101 is composed of solar power cells made of crystalline semiconductors for photoelectric conversion, and its power generation efficiency is relatively high.

The solar power generation module B 102 is composed of solar power cells made of non-crystalline semiconductors for photoelectric conversion, and its power generation efficiency is lower than the solar power generation module A 101, but its weight is lighter.

The radio-wave power generation module 103 is composed of radio-wave power generation elements for capturing radio-waves (electromagnetic waves) in the air and converting them to electric, where a frequency characteristic is adjusted such that the module captures radio-waves having a specific frequency (single frequency) other than those used for normal communication. This module is expected to generate power during night and day.

The thermal power generation module 104 is composed of thermoelectric conversion elements for generating power from a temperature difference between a high-temperature portion near the vehicle engine or the like and a low-temperature portion of the vehicle. There is a type of such modules which is capable of utilizing exhaust heats accompanied by driving the vehicle.

Impedance-matching units (IMUs) 111-114 are configured to perform impedance matching in order to efficiently collect electric energies generated by the solar power generation module A 101, the solar power generation module B 102, the radio-wave power generation module 103 and the thermal power generation module 104 (each of electric energies are marked as 101P, 102P, 103P and 104P, respectively, in the figure).

The impedance-matching unit 111 is used for the solar power generation module A 101. As a relatively large power (electric energy) 101P is obtained from the solar power generation module A 101, composed of solar power cells (made of crystalline semiconductors), its impedance is relatively low and the impedance matching is performed in low impedance level, accordingly.

The impedance-matching units 112 and 114 are for the solar power generation module B 102 and the thermal power generation module 104, respectively. As electric energies (102P and 104P, respectively) obtained from the solar power generation module B 102, composed of solar power cells (made of non-crystalline semiconductors), and the thermal power generation module 104, composed of thermoelectric conversion elements, are smaller, compared with a energy from the solar power module A 101, the impedance matching is performed in high impedance level, accordingly.

The impedance-matching unit 113 is for the radio-wave power generation module 103. As electric energies 103P obtained from the radio-wave power generation module 103, composed of radio-wave power generating elements, is even smaller, compared with energies from the solar power generation module B 102 and the thermal power generation module 104, the impedance matching is performed using more higher (ultra-high) value, accordingly.

The control unit (CU) 120 is provided with electric powers, via the impedance-matching units 111-114, by the solar power generation module A 101, the solar power generation module B 102, the radio-wave power generation module 103 and the thermal power generation module 104, respectively (each of electric powers are marked as 111P, 112P, 113P and 114P, respectively, in the figure), and then provides an electric power 120P to the battery 130.

The battery 130 is charged with the electric power 120P from the control unit 120, and provides it to a load or loads (not shown) as well.

In other words, the battery 130, as a secondary battery, charges electric energies generated by power generation modules of the power-harvesting media (the solar power generation module A 101, the solar power generation module B 102, the radio-wave power generation module 103 and the thermal power generation module 104) and also complements an electric energy in a situation where the power being generated by the power generation modules is not enough for the load. In addition, the battery is also utilized for those cases requiring a high-quality electric power, considering its stable voltage and power.

Note that the battery 130 is depicted as a single component in FIG.1, but a plurality of batteries may be distributed to multiple locations.

The control unit 120 recognizes features and properties of the power generation modules 101-104, and controls the impedance-matching units 111-114 by control signals 121S-124S so that each of power generation modules are driven in an optimized way at every moment, based on pieces of information from each of power generation modules regarding the most appropriate status for the power harvesting.

For example, the solar power generation module A 101 and the solar power generation module B 102 are preferentially driven, during sunshine time or in suitable situations thereto, while the power generation modules composed of other power-harvesting media (the radio-wave power generation module 103 or the thermal power generation module 104) are preferentially driven, during eclipse time or in suitable situations thereto, so that driving control is minimized for the solar power generation module A 101 and the solar power generation module B 102 to save the controlling power.

Note that Global Positioning System (GPS) information may be linked with time information regarding the availability of sunshine. In addition, even during eclipse time, the solar power generation module A 101 or the solar power generation module B 102 may be driven if other light source (lights in entertainment district, for example) is available.

The control unit 120 monitors the internal impedance of each of the power generation modules 101-104 and the battery 130 in real time, and then controls the impedance-matching units 111-114 so that each internal impedance of the power generation modules 101-104 becomes almost equal to the internal impedance of the battery 130.

### <Impedance matching and Impedance-matching unit>

Next, an explanation will be made on the importance of the impedance matching when the battery 130 is charged with the generated power by the power generation modules 101-104, and on the impedance-matching units 111-114 for matching the impedance.

The impedance on which the power (power energy) generated from the power generation modules (101-104) is transferred to the battery 130 most efficiently is being each internal impedance of the power generation modules (101-104) matched with the internal impedance of the battery 130. If one of the impedance is higher or lower than the other, the generated power is not transferred to and charged in the battery 130 efficiently.

For example, assuming the internal impedance of the battery 130 being a (Ω), and each internal impedance of the power generation modules 101-103 being b (Ω), c (Ω) and d (Ω), respectively, there are following relationships among those values, as each of the power generation specifics is different;

The internal impedance b (Ω) is low, and b < a.

The internal impedance c (Ω) is high, and c > a.

The internal impedance d (Ω) is ultra-high, and d >>a.

As above, each internal impedance b (Ω), c (Ω) and d (Ω) of the power generation modules 101-103, respectively, are different, compared with the internal impedance a (Ω) of the battery 130, therefore it is impossible to charge the battery 130 efficiently, by simply connecting the power generation modules 101-103 therewith.

Note that an explanation was omitted above for the power generation module 104, as it is almost the same as the power generation module 102.

Each of the impedance-matching units 111-114 in FIG.1 is configured to adjust an impedance difference between one of the power generation modules 101-104 and the battery 130 to the minimum level..

Assuming a case in changing impedances of the power generation modules 101-103 as follows;
- The internal impedance b (Ω) is changed to a1 (Ω) by the impedance-matching unit 111
- The internal impedance c (Ω) is changed to a2 (Ω) by the impedance-matching unit 112
- The internal impedance d (Ω) is changed to a3 (Ω) by the impedance-matching unit 113
   where a (Ω) ≈ a1 (Ω), a (Ω) = a2 (Ω), a (Ω) ≈ a3 (Ω)
a control is made so that above relationships are established by monitoring the internal impedance a (Ω) of the battery 130 and each internal impedance of the power generation modules 101-104 in real time, and then performing impedance matching for each internal impedance a1 (Ω), a2 (Ω), a3 (Ω) and that of the power generation module 104 being adjusted as almost equal to a (Ω) by the impedance-matching units 111-114, respectively, thus charging is performed under the most appropriate condition.

By performing impedance matching above, an electric conduction loss is reduced and the charging efficiency improves.

### <Example for mounting different Power-harvesting media from each other on a vehicle>

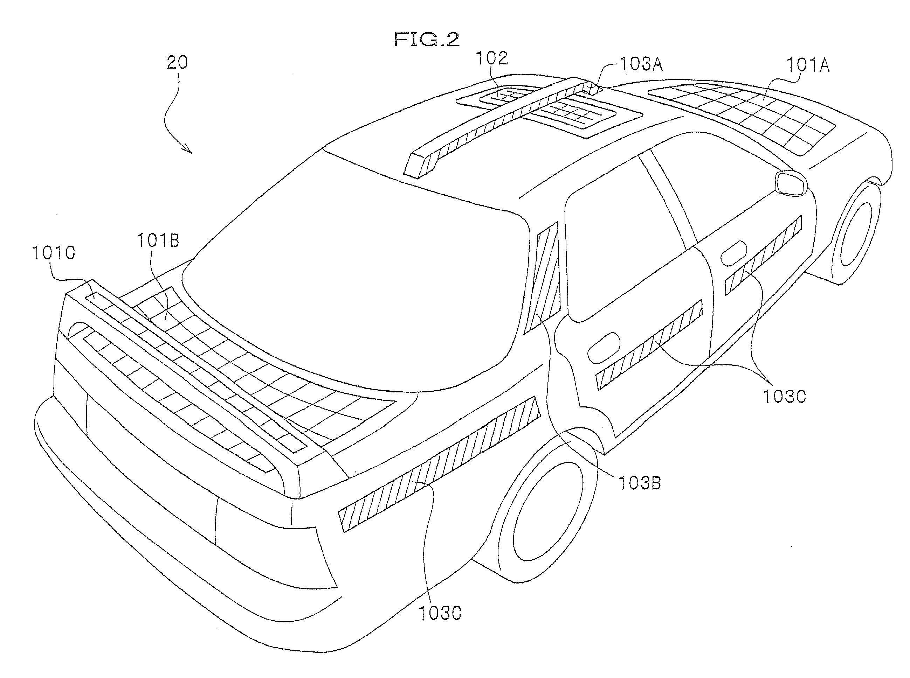

FIG.2 illustrates an example where different power-harvesting media from each other (power generation modules) are mounted on a vehicle.

In FIG.2, solar power generation modules A (101A-101C) are mounted at the front and the rear portions of a vehicle 20. In addition, the solar power generation module B 102 is mounted on the roof of the vehicle.

Furthermore, radio-wave power generation modules (hereinafter sometimes expressed as "antenna") 103A-103C are mounted on the top and the lateral sides.

The solar power generation modules A (101A-101C) and the solar power generation module B 102 primarily run on sunlight. The solar power generation modules A (101A-101C) have a better conversion ratio than the power generation module B 102, while the latter has an advantage that it has a lighter weight compared to the former.

The antennas 103A-103C capture and collect radio-waves in the air, with a specific frequency other than those used for normal communication, by adjusting a frequency characteristic.

The solar power generation modules A (101A-101C) and the solar power generation module B 102 can obtain a converted energy more efficiently than the antennas 103A-103C, composed of the radio-wave power cells, during daytime when sunshine is likely available.

The antennas 103A-103C are composed of radio-wave power cells, as described before, and have a feature of being able to obtain a converted energy even during night, during which the solar power generation modules A (101A-101C) and the solar power generation module B 102 cannot work effectively.

Note that the shape of each of solar power generation modules A (101A-101C), the solar power generation module B 102 and the antennas 103A-103C is variable and depends on the form and the condition of the part of the vehicle, on which it is mounted.

### Other Embodiments

An embodiment was described above for the integrated control system for power generation devices, but there can be other embodiments as will be described below.

FIG.2 shows an example of mounting the solar power generation modules and the radio-wave power generation modules, but others can be mounted such as the thermal power generation module that utilizes thermal differences between a specific part of the vehicle and the air or others, or the vibration power generation module that utilizes vibrations at a specific part of the vehicle.

Note that a Seebeck effect is utilized by the thermal power generation module, and so is a piezoelectric effect by the vibration power generation module.

In FIG.1, it was explained that the radio-wave power generation module (an antenna) 103 is adjusted to capture radio-waves with a specific frequency (a unique frequency) other than those used for normal communication, but antennas can be configured to capture radio-waves with various frequencies or provided with a regulating device for varying a frequency of the radio-waves to be captured.

In above explanations, cases were shown for mounting an integrated control system on a vehicle, as controlling different power generation modules of power-harvesting media such as a solar power cells, a thermal power cells, a radio-wave power cells and a vibration power cells. However cases should not be limited to vehicles and are applicable to other transportations such as vessels or airplanes, or constructions such as buildings (houses), towers (iron towers), bridges, overpasses or the like.

### Supplement for the Invention and Embodiments

The integrated control system for power generation devices of the present invention controls power generation modules consisting of different kinds of power generation media in an integrated way and obtains the most effective power generation.

More specifically, the control system of the present invention makes use of different power-harvesting media such as solar power cells, thermal power cells, radio-wave power cells, vibration power cells or the like, monitors efficiency of each of power generation modules so that the power is generated always with the maximum efficiency, and stored.

The control system is capable of obtaining the maximum efficiency from the power generation modules, by monitoring impedance at both of consuming side and power generation side in real time and doing impedance matching. Thus conduction loss is reduced and charging efficiency is drastically improved, compared with a conventional method without an impedance matching in real time.

In addition, cost is also reduced because there is no need for providing the same number of control units as the power generation modules.

In summary, the integrated control system for power generation devices has following features when mounted on a vehicle (car) or other embodiments.

There is no or a reduced battery load for a vehicle, as power can be generated during 24 hours

The integrated control system for power generation devices under the present invention can be operational even when a car is not travelling

The integrated control system for power generation devices under the present invention can be used without complement by any commercial powers

Charging mobile devices and personal computers is possible without starting an engine in case of emergency

Inner space of a car can be warmed on cold days without consuming a battery or gasoline by running its engine, providing a comfortable environment in a car and contributing to a lower fuel cost

Inner space of a car can be cooled on hot days without consuming a battery or gasoline by running its engine, providing a comfortable environment in a car and contributing to a lower fuel cost

By arranging communication media such as mobile equipment inside a car, the status of a car can be checked with a personal ID or the like without starting an engine, or control can be done for a function to warm or cool inside of a car

By arranging a security camera inside of a car, status of a surrounding area can be monitored without starting an engine, contributing to the neighborhood security

In case different kinds of power generation modules are mounted on a vehicle, an internal impedance and an availability condition varies by each, therefore a control circuit is needed for each of them. As the number of modules and control circuits grow, the cost and the power consumption increase and the efficiency decreases.

The present invention solves these issues for multiple power generation modules, composed of different power-harvesting media from each other, with an integrated control system for power generation devices that is configured for generating, charging and consuming the power with the most appropriate distribution ratio, by monitoring an internal impedance thereof and of the battery in real time, and then controlling the impedance-matching units so that each internal impedance of the multiple power generation modules becomes almost equal to that of the battery, for drawing the maximum efficiency out of the modules.

## Claims

1. An integrated control system, for power generation devices, comprising:
a plurality of power generation modules composed of different power-harvesting media from each other;
a plurality of impedance matching units, each of which is configured to match an internal impedance of one of the power generation modules;
a control unit for monitoring and controlling the plurality of impedance-matching units; and
a battery which is charged with the plurality of power generation modules
and supplying the power charged in the battery or generated by the power generation modules to be consumed by loads,
wherein
the control unit monitors the internal impedance of each of the power generation modules and an internal impedance of the battery in real time, and then controls the impedance-matching units so that each internal impedance of the plurality of the power generation modules becomes almost equal to the detected internal impedance of the battery.

2. The integrated control system for power generation devices according to claim 1, wherein a solar power generation module is included in the plurality of the power generation modules.

3. The integrated control system for power generation devices according to claim 1, wherein a radio-wave power generation module is included in the plurality of the power generation modules.

4. The integrated control system for power generation devices according to claim 1, wherein a thermal power generation module is included in the plurality of the power generation modules.

5. The integrated control system for power generation devices according to claim 1, wherein a vibration power generation module is included in the plurality of the power generation modules.

6. The integrated control system for power generation devices according to claim 1, wherein the power generation device is mounted on a vehicle.
